(19) Europäisches Patentamt
European Patent Office
Office européen des brevets

(11) **EP 1 758 025 A2**

(12) **EUROPEAN PATENT APPLICATION**

(43) Date of publication:
   **28.02.2007 Bulletin 2007/09**

(51) Int Cl.:
   *G06F 11/28* *(2006.01)*

(21) Application number: **06119013.8**

(22) Date of filing: **16.08.2006**

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(30) Priority: **16.08.2005 GB 0516785**

(71) Applicant: **Remote Operations Ltd.**
   **East Parade**
   **HG1 5LT Yorkshire , Harrogate (GB)**

(72) Inventors:
   • **Sucharov, Leon**
     **HARROGATE, Yorkshire HG1 2JF (GB)**
   • **Sucharov, Toby**
     **HARROGATE, Yorkshire HG1 2JF (GB)**
   • **Rice, Philip**
     **HARROGATE, Yorkshire HG1 4HB (GB)**

(74) Representative: **Stanley, David William**
   **Stanleys**
   **Intellectual Property**
   **Kings Court**
   **12 King Street**
   **Leeds LS1 2HL (GB)**

(54) **Data processing system and method for replicating the behaviour of a system**

(57)    A data processing system 1 receives input data in parallel with a legacy system 10. A rules engine 2 processes the input data in accordance with a set of rules and produces an output that is fed to a comparator 3, which compares the output from the rules engine 2 with that from the legacy system 10. Any difference between the two outputs generates an error signal that is passed to a rules modification unit 4, which may be provided with a display 5 and keyboard 6 to display to a user rules that require modification and allow user input to modify such rules. The rules engine 2 may interact with the rules modification unit 4 to indicate data relating to proposed rules modifications - e.g. justifications for modifications of rules.

EP 1 758 025 A2

**Description**

The present invention relates to data processing and is concerned particularly, although not exclusively, with data processing systems and methods that are arranged to replace legacy systems.

As will be known to the skilled reader, a legacy system is, in general terms, a system (usually a data processing system) or application that has been developed and maintained over a period of time but has become outdated. However, a legacy system often continues to be used because of the high cost of replacing or redesigning it, despite its poor competitiveness and compatibility with modern equivalents. It is common for its original designers and implementers to be no longer available to perform the system's maintenance and, as specifications and documentation for a legacy system are typically outdated, the only definitive source of information about the system is considered to be the code itself. Analysing the code to replace, redesign or even just update the legacy system can be an extremely expensive exercise.

Preferred embodiments of the present invention aim to provide data processing systems that can replicate the behaviour of legacy systems in a relatively simple, rapid and effective manner.

Known techniques exist for extracting behaviour from a system or expert - for example, Case Based Reasoning (Roger Schank, Dynamic Memory: A Theory of Learning in Computers and People, New York: Cambridge University Press, 1982) and Ripple Down Rules *(see, for example, www.rippledown.org).* However, none of the known techniques can solve the general case where the output data can be of any size and structure, containing any number of interdependencies.

Preferred embodiments of the present invention aim to provide data processing systems that are improved in this respect.

According to one aspect of the present invention, there is provided a data processing system arranged to receive complex input data and derive therefrom complex output data in replication of the behaviour of an existing complex system, wherein the data processing system is arranged to process the input data in parallel with the existing system, to generate an error signal when the output of the data processing system differs from that of the existing system, and to receive rule correction data that modifies the behaviour of the data processing system to conform to that of the existing system.

Complex data is here defined to be a completely generic labelled directed graph. It should be noted that the well used tree, and value attribute pair data representation formats are subsets of this. A complex system is one that processes complex data.

Preferably, the data processing system processes the input data in accordance with IF and THEN rules.

Preferably, the data processing system also processes the input data in accordance with NOT rules.

A data processing system as above is preferably arranged to store corresponding input and output data from the existing system, to produce said error signal when the output of the data processing system differs from that of the existing system for given input data and, in response to said error signal, to identify at least one rule of the data processing system that requires modification to correct the behaviour of the data processing system to conform to that of the existing system.

A data processing system as above preferably comprises means for displaying to a user rules for modification and means for receiving confirmation signals initiated by a user to confirm modification of the displayed rules.

A data processing system as above preferably further comprises means for receiving modification data from a user to define modification of displayed rules.

A data processing system as above preferably further comprises means for displaying to a user justifications for modification of rules and means for receiving confirmation signals initiated by a user to confirm displayed justifications.

Such a data processing system preferably further comprises means for receiving modification data from a user to define modifications of displayed justifications.

In another aspect, the invention provides a method of processing complex input data to derive therefrom complex output data in replication of the behaviour of an existing complex system, the method comprising the steps of:

a.    processing the input data by a data processing system in parallel with the existing system;

b.    generating an error signal when the output of the data processing system differs from that of the existing system; and

c.    generating rule correction data that modifies the behaviour of the data processing system to conform to that of the existing system.

Preferably, the data processing system is in accordance with any of the preceding aspects of the invention.

For a better understanding of the invention, and to show how embodiments of the same may be carried into effect, reference will now be made, by way of example, to the accompanying diagrammatic drawings, in which:

Figure 1 illustrates operation of a data processing system comprising one example of an embodiment of the invention;

Figure 2 illustrates an example of a data flow model;

Figure 3 illustrates an example situation in the form of a conceptual graph;

Figure 4 shows a conceptual graph that corresponds to Figure 3 but with a conclusion added;

Figure 5 shows a conceptual graph that illustrates a situation with a more complex conclusion;

Figure 6 shows a conceptual graph that illustrates a continuous edit example; and

Figure 7 is a block schematic drawing of one example of a data processing system in accordance with an embodiment of the invention.

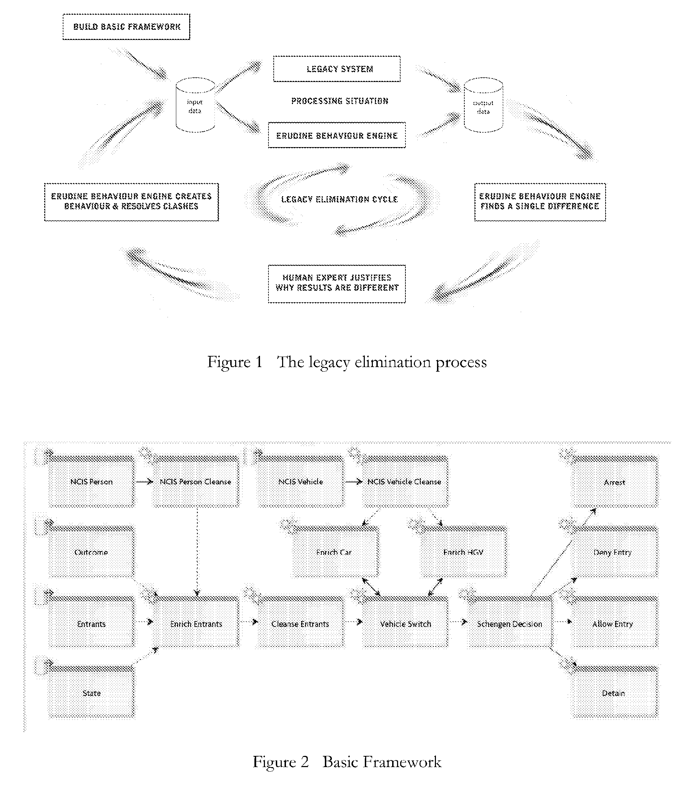

Figure 1 illustrates the basic process of how a system may be implemented to clone the behaviour of an existing legacy system.

The embodiment of Figure 1 splits the task of cloning a legacy system into two parts:

o **Dataflow Model Level -** This controls the flow of information throughout the entire data processing system. Data processing using the dataflow model traditionally starts from a database or input node and propagates through the model, as defined by the behaviour of and links between individual nodes.

o **Node level -** A node represents a data processing object that performs a particular task. The scope of the task performed in any given node is user defined. The node represents a generic building block of system functionality. Nodes can fulfil any, some or all of the following data functions: transforming data from database format to internal system format; data publishing to external format; cleansing; enrichment; switching; data retrieval from other nodes; rules based reasoning; legacy cloning and user defined custom plug-in.

Figure 2 shows a typical example of a data flow model for a border control decision making system. Nodes are used within this model to fulfil a variety of roles. The nodes on the left hand side of the diagram are used to retrieve data from border control databases. In this model, the Entrants node on the middle-left represents individual people trying to cross the border. Other database nodes represent supplementary information that will be required to make a full decision. Subsequent nodes enrich and cleanse the data so that a Schengen decision node can process the entrants and make an entrance decision using its core logical processing unit. The Entrant data is then sent to a variety of output nodes on the right hand side of the diagram, each of which nodes represents a specific entrance decision.

At any point, the user is free to create behaviour for any individual node added into the data flow model.

Node behaviour can be broadly split into two categories:

- **Linking to external Databases:** Nodes can import or export data from standard database tables via a simple GUI (Graphical User Interface).

- **Internal manipulation of data:** The node can manipulate the structure of the input data using a novel Non-Sequential Rules Engine. This process is quite involved and is described in more detail below.

The Non-Sequential Rules Engine (NSRE) is the core logical processing unit of this embodiment. Its job is to take input data and to produce an output based upon a set of internally modelled rules. The data representation system used in the NSRE is a system of conceptual graphs, which format is a particularly rich and generic data representation format that can be used to describe both data concepts and relations between concepts. Conceptual graphs can easily represent any standard data formats including relational databases, HTML, XML and even natural language.

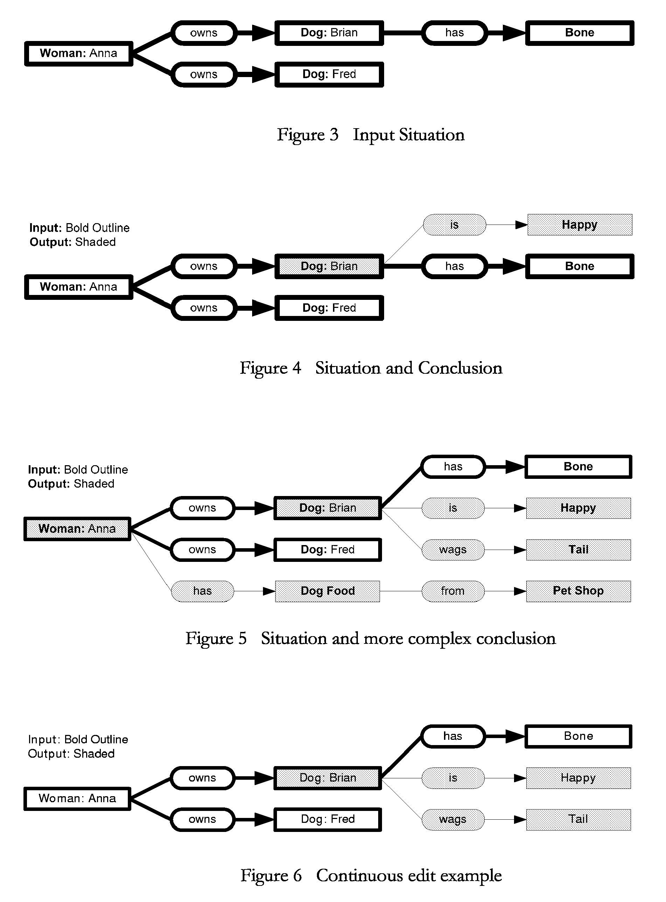

The NSRE can be used in a number of ways to process data, the simplest way being conclusion and justification mode. In this mode, the user, whilst viewing some data, which we can also refer to as a "situation", can make a conclusion on this data. This conclusion can be in the form of adding or modifying the structure of the data. Figure 3 illustrates an example situation in the form of a conceptual graph, the meaning of which is self-evident.

Using a GUI, the user can add a conclusion to this situation - in this case, additional information (is ... Happy) as shown at the right hand side of Figure 4.

Any new conclusions require justifications. The NSRE requires that the user justify why this dog is happy and the user can simply make a justification by clicking on [Dog]->(has)->[Bone]. It may be noted that the simpler justification [Dog] would not satisfy this case as then both Dogs would be happy, which is not the case in the conclusion.

This is the simplest case of making a rule and the NSRE will now contain the rule:

$$\text{IF } [\text{Dog}] \text{->} (\text{has}) \text{->} [\text{Bone}]$$

$$\text{THEN } [\text{Dog}] \text{->} (\text{is}) \text{->} [\text{Happy}]$$

The user is free to make several rules at the same time by adding multiple conclusions to the situation. The user then has to justify the conclusions made either individually or all together.

Figure 5 illustrates a situation with a more complex conclusion and, in this example, a NSRE with no previous rules would ask the user for several justifications, one for each part of the conclusion.

This continuous editing mode allows the user the freedom to modify the situation in any way they wish without becoming entangled with any possible ordering issues that could arise in traditional rules engines from creating several rules simultaneously.

The example of Figure 5 is of a "no-cornerstone" case, meaning that previous rules within the rules engine have not been modified by this rules change, and thus there are no cornerstones or previous situations to which this situation is similar.

If the user changed a conclusion, then the user would generate a "cornerstone" case. When the NSRE adds a conclusion to a situation it records both the rule which caused that conclusion to be added and the original situation that rule was made upon; this is the cornerstone. Logically, for the user to change a conclusion, there must exist some difference between the current situation and cornerstone; otherwise they would have the same conclusion.

The user is presented with the situation and cornerstone and has to make a justification in either the situation or cornerstone which depends upon a difference between the two cases.

Legacy cloning is a continuation of conclusion and justification. However, instead of the user supplying the system with a conclusion, the legacy system supplies the conclusion to the system. This conclusion is either supplied from a data file or from running the legacy system in parallel using the same input. In the data flow model shown in Figure 2, the Outcome node on the left imports outcomes from a database from a Border Control Legacy system.

Legacy cloning compares the expected conclusion from the legacy system with the conclusion generated by the NSRE. Where a difference arises, the NSRE conclusion is automatically amended to match that of the legacy system.

Embodiments of the invention can sequentially process all available situations in turn and present the user with all situations that require modification. Only situations where the system conclusion does not match the legacy conclusion are presented to the user for justification. Every time that the user corrects a situation, the legacy elimination process can start again with the updated NSRE.

The above embodiments take their outputs from legacy systems. Another mode of operation is to have a human domain expert provide an output conclusion in response to a given input. In this mode, the system effectively 'clones' the expert's knowledge of the domain in question.

In another option, default suggestions are calculated by the system to aid the user in creating justifications. In the simplest case, these are calculated by the system by examining overlaps between conclusion and situations. For example, for the output shown in Figure 5, when justifying the conclusion [Dog: Brian]->(is)-> [Happy], the system can provide the default justification [Dog: Brian] as this exists in both the situation and conclusion.

In another option of "continuous editing", an advanced rules engine allows for generation rules, i.e. rules that depend on the output of previous rules. For example consider a system where the rule exists:

$$\text{If: [Dog: * dog]->(is)->[Happy]}$$

$$\text{Then [?dog]->\{wags)->[Tail]}$$

If an expert, when considering an output to the input situation described in Figure 3, realises it is wrong and changes it to the correct output as shown in Figure 4, the system is able to calculate that the above rule will also fire and thus shows the user the output that will result, as illustrated in Figure 6.

Thus the conclusion fragment, [Dog: Brian]-> {wags)-> [Tail] has been added by the system automatically and does not need to be justified. Similarly, if the expert started with the conclusion shown in Figure 6 and removed [Dog: Brian]-> {wags)-> [Tail], he would have to justify it. However, if he then removed [Dog: Brian]-> {is)->[Happy], he will have to justify that, but will no longer have to justify the removal of [Dog: Brian]-> {wags)-> [Tail] as the system can determine that it will never be generated anyway.

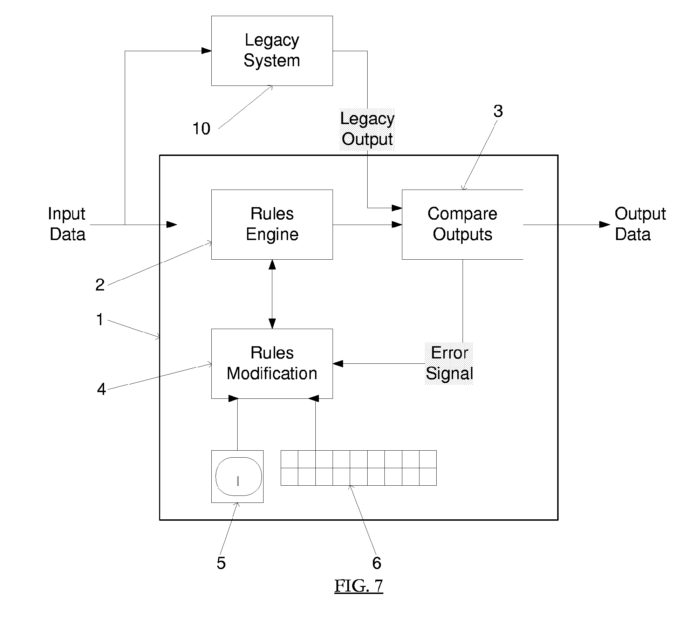

Figure 7 summarises the legacy elimination process of embodiments of the invention as described above. A data processing system 1 receives input data in parallel with a legacy system 10. A rules engine 2 processes the input data in accordance with a set of rules and produces an output that is fed to a comparator 3, which compares the output from the rules engine 2 with that from the legacy system 10. Any difference between the two outputs generates an error signal that is passed to a rules modification unit 4, which may be provided with a display 5 and keyboard 6 to display to a user rules that require modification and allow user input to modify such rules. The rules engine 2 may interact with the rules modification unit 4 to indicate data relating to proposed rules modifications - e.g. justifications for modifications of rules.

It will be appreciated that, in the foregoing, a "rule" is equivalent to a logic operation.

For a more detailed description of an NSRE, the reader is referred to the specification and drawings of our co-pending GB patent application 05 16786.1 filed 16 August 2005, a copy of the specification and drawings being annexed hereto.

In this specification, the verb "comprise" has its normal dictionary meaning, to denote non-exclusive inclusion. That is, use of the word "comprise" (or any of its derivatives) to include one feature or more, does not exclude the possibility of also including further features.

The reader's attention is directed to all and any priority documents identified in connection with this application and to all and any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data processing system arranged to receive complex input data and derive therefrom complex output data in replication of the behaviour of an existing complex system, wherein the data processing system is arranged to process the input data in parallel with the existing system, to generate an error signal when the output of the data processing system differs from that of the existing system, and to receive rule correction data that modifies the behaviour of the data processing system to conform to that of the existing system.

2. A data processing system according to claim 1, wherein the data processing system processes the input data in accordance with IF and THEN rules.

3. A data processing system according to claim 2, wherein the data processing system also processes the input data in accordance with NOT rules.

4. A data processing system according to claim 1, 2 or 3, arranged to store corresponding input and output data from the existing system, to produce said error signal when the output of the data processing system differs from that of the existing system for given input data and, in response to said error signal, to identify at least one rule of the data processing system that requires modification to correct the behaviour of the data processing system to conform to that of the existing system.

5. A data processing system according to claim 4, comprising means for displaying to a user rules for modification and means for receiving confirmation signals initiated by a user to confirm modification of the displayed rules.

6. A data processing system according to claim 5, further comprising means for receiving modification data from a user to define modification of displayed rules.

7. A data processing system according to claim 4, 5 or 6, further comprising means for displaying to a user justifications for modification of rules and means for receiving confirmation signals initiated by a user to confirm displayed justifications.

8. A data processing system according to claim 7, further comprising means for receiving modification data from a user to define modifications of displayed justifications.

9. A method of processing complex input data to derive therefrom complex output data in replication of the behaviour of an existing complex system, the method comprising the steps of:

   a. processing the input data by a data processing system in parallel with the existing system;
   b. generating an error signal when the output of the data processing system differs from that of the existing system; and
   c. generating rule correction data that modifies the behaviour of the data processing system to conform to that of the existing system.

10. A method according to claim 9, wherein the data processing system is in accordance with any of claims 2 to 8.

11. A data processing system substantially as hereinbefore described with reference to the accompanying drawings.

12. A method of processing data, substantially as hereinbefore described with reference to the accompanying drawings.

Figure 1   The legacy elimination process

Figure 2   Basic Framework

Figure 3   Input Situation

Figure 4   Situation and Conclusion

Figure 5   Situation and more complex conclusion

Figure 6   Continuous edit example

Legacy
System

Legacy

Input
Data

Rules
Engine

Compare
Outputs

Data

2

1

4

Rules
Modification

Error
Signal

5

6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0516786 A

**Non-patent literature cited in the description**

- **ROGER SCHANK.** Dynamic Memory: A Theory of Learning in Computers and People. Cambridge University Press, 1982